# DEMANDE DE BREVET EUROPEEN

(11) **EP 2 066 106 A1**
(43) Date de publication de la demande: **03.06.2009**
(21) Numéro de dépôt: 07301588.5
(22) Date de dépôt: 27.11.2007
(51) Int. Cl.: H04M 15/28, H04M 15/30

(54) **Procédé de mise à disposition, à la demande, de la tarification actualisée d'un service réparti et dispositif associé**

(71) Demandeur: GEMPLUS, 13420 Gémenos (FR)
(72) Inventeur: Faure, Frédéric, 13260, Cassis (FR); Mallet, Lionel, 13007, Marseille (FR); Brun, Alain, 13400, Aubagne (FR); Foesser, Christophe, 13600, La Ciotat (FR); Halle, David, 83200, Toulon (FR)

(57) **Abrégé**

L'invention décrit un procédé associé à un service réparti entre plusieurs dispositifs électroniques, consistant, à la demande, à initier une collecte de l'ensemble des paramètres entrant dans le calcul de la tarification de ce service, puis à utiliser ces paramètres pour calculer la tarification actualisée, et enfin mettre à disposition la tarification obtenue.

L'invention décrit également un dispositif possédant les moyens pour fournir, en collaboration avec au moins un autre dispositif électronique, un service à un usager, et les moyens pour initier la mise à disposition de la tarification actualisée de ce service, et collecter l'ensemble des paramètres nécessaires au calcul de cette tarification.

## Description

L'invention concerne un procédé de mise à disposition, à la demande, de la tarification actualisée d'un service réparti.
L'invention porte en particulier sur un procédé permettant, de manière dynamique et automatisée, de fournir à l'utilisateur des moyens d'être informé des évolutions de la tarification d'un service.

Dans le monde qui nous entoure, de plus en plus de services répartis sont proposés aux usagers. Nous appelons « service réparti » un service qui nécessite plusieurs dispositifs électroniques pour être réalisé. Nous trouverons par exemple un dispositif électronique en interface avec l'utilisateur dit Front-End, et au moins un autre dispositif électronique avec des ressources plus importantes (dit Back-End) qui va traiter les informations avant de les envoyer vers le Front-End. La très grande majorité des services fournis par les appareils électroniques portables sont des services répartis car ils font appel à des ressources ou à des données présentes sur d'autres appareils. Un des plus répandus de ces services est sûrement la téléphonie mobile.
Par définition même, ces services répartis font entrer en jeu plusieurs dispositifs électroniques, et donc leurs facturations sont souvent dépendantes de plusieurs paramètres, eux-mêmes pouvant varier, ce qui les rend extrêmement complexes. De plus, même si l'utilisateur final est informé de quels paramètres entrent dans la tarification de ses services, souvent il n'a pas accès aux valeurs actualisées des paramètres en question, ce qui l'empêche de connaître précisément la tarification qui est associée à un service au momment où il souhaite y faire appel.

La présente invention vise à résoudre cet inconvénient en proposant une diffusion dynamique de la tarification des services.
A cet effet, la présente invention a tout d'abord pour objet un procédé de mise à disposition, de la tarification actualisée d'un service réparti entre plusieurs dispositifs électroniques, cette tarification variant selon au moins un paramètre stocké dans la mémoire d'un des dispositifs électroniques. Dans une étape d'initiation, un des dispositifs électroniques, dit Front-End, initie une mise à disposition de la tarification du service, s'ensuivent les étapes de
- collecte, étape durant laquelle, le Front-End établit une communication avec chacun des autres dispositifs électroniques contenant un paramètre apte à faire varier la tarification, et télécharge, dans une mémoire locale, la valeur instantanée du paramètre
- application, étape consistant en l'application du paramètre, au calcul de la tarification actualisée du service
- mise à disposition, étape consistant en la mise à disposition de la tarification actualisée du service.
   Dans un mode de réalisation, le procédé comprend en outre une étape d'information, consistant en une transmission de la tarification actualisée, au client du service. Cette étape d'information peut se faire par exemple et de façon non limitative, par l'affichage de la tarification actualisée sur un écran, ou sa diffusion via un dispositif apte à émettre des ondes sonores.

Dans un mode de réalisation, le procédé comprend en outre une étape de décision, consistant en un déclenchement d'au moins une étape de réaction si la tarification actualisée atteint un seuil prédéfini. L'étape de réaction peut consister par exemple en une interruption du service.
Dans des modes particuliers de réalisation, les paramètres susceptibles de faire varier la tarification peuvent être par exemple une position géographique, une durée, une valeur calendaire, voire dépendre d'un tiers.
Dans un mode de réalisation, l'étape d'initiation peut être réalisée avant le lancement du service. Dans un autre mode de réalisation, l'étape d'initiation peut être réalisée pendant l'exécution du service, dans un troisième mode de réalisation, l'étape d'initiation peut être réalisée à la demande de l'utilisateur. Dans un mode de réalisation, le service est un échange de données

La présente invention a aussi pour objet un dispositif électronique communicant possédant des moyens pour fournir, en collaboration avec au moins un autre dispositif électronique, un service à un usager, la tarification de ce service variant selon au moins un paramètre, ce paramètre étant stocké dans la mémoire d'un des dispositifs électroniques, ce dispositif électronique communicant possédant également des moyens pour initier une mise à disposition de la tarification actualisée de ce service, ainsi que des moyens pour collecter et stocker au moins un paramètre nécessaire à l'établissement de la tarification actualisée du service.
Un avantage supplémentaire de l'invention est que l'utilisateur peut être informé des variations de tarifications en temps réel.

D'autres caractéristiques et avantages de l'invention ressortiront de la description qui en est faite ci-après, à titre indicatif et nullement limitatif, en référence aux dessins annexés dans lesquels:

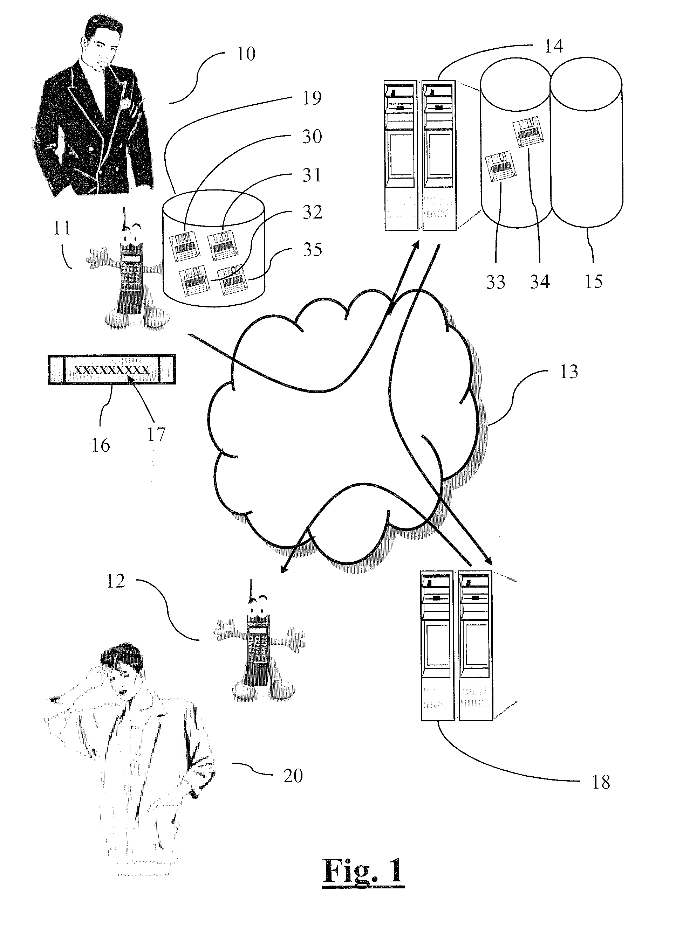

- La figure 1 représente un procédé selon l'invention, appliqué à un service réparti à quatre dispositifs électroniques.

La figure 1 représente un service réparti à quatre dispositifs électroniques destiné à faire entrer un premier appareil portable communicant 11, avec un deuxième appareil portable communicant 12, au travers d'un réseau sans fil 13.

Nous sommes typiquement dans le cas où un utilisateur 10 est en possession d'un téléphone cellulaire 11 et souhaite contacter un second utilisateur 20 qui possède le téléphone cellulaire 12.

Le service de communication vocale n'est qu'un des services que le téléphone 11 est capable d'offrir, et il est symbolisé par le contenant 16. L'identifiant du téléphone 12 est symbolisé par les caractères 17.
A ce stade là, l'utilisateur 10 n'est pas en mesure de savoir combien va lui coûter la communication vocale avec l'utilisateur 20. Les conditions de tarifications lui ont été probablement communiquées lors de la signature de son contrat avec son opérateur 14, par exemple on lui a dit que la tarification était dépendante de
- sa localisation 30, particulièrement hors du territoire couvert par l'opérateur 14,
- son contrat 31,
- de sa consommation 32, mais aussi
- de son correspondant, en effet, la facturation est différente si le correspondant a le même opérateur que vous, un opérateur partenaire ou un opérateur inconnu, ces informations sont rassemblées dans le tableau 33,
- de promotions éventuelles 34,
- et enfin de l'heure d'appel 35. L'utilisateur peut connaître, à tout moment, l'heure, sa localisation, son contrat et sa consommation, mais il est beaucoup plus difficile de savoir si son correspondant a changé récemment d'opérateur et donc son opérateur actuel, et par association s'il existe actuellement des accords tarifaires entre ces deux opérateurs, ou bien si un opérateur a une promotion en cours.
   Ainsi l'opérateur 14 auquel est lié l'utilisateur 10 est très important pour établir une tarification actualisée, car il possède dans une mémoire 15, certaines informations instantanées que ne peut connaître l'utilisateur 10.
   Nous appelons « information instantanée », une information à jour et cohérente au moment où on la consulte. De la même manière, la « valeur instantanée » d'un critère est sa valeur à jour au moment où l'on souhaite consulter ce critère.
   Ainsi pour pouvoir établir la tarification actualisée, les paramètres dont les valeurs instantanées ne sont connues que de l'opérateur vont devoir être collectées.
   Dans un procédé selon l'invention, le téléphone 10 est le Front-End du service, lors de la consultation de son annuaire téléphonique embarqué dans son téléphone 11, l'utilisateur 10 déclenche automatiquement l'étape d'initiation. Suit l'étape de collecte durant laquelle le téléphone va ouvrir une communication avec les dispositifs électroniques possédant des informations nécessaires à l'actualisation de la tarification. Ici, le téléphone 11 va ouvrir une communication avec l'opérateur 14, et lui demander les valeurs instantanées dont il a besoin, à savoir les pondérations éventuelles 33 appliquées en fonction de l'opérateur lié à l'identifiant 17, et ses promotions en cours 34. L'opérateur conserve ces valeurs dans une mémoire 15.
   Les valeurs instantanées des paramètres contenus dans la mémoire 19 du téléphone sont relevées aussi.
   Une fois toutes ces informations disponibles dans le téléphone 11, l'étape d'application, applique les valeurs instantanées collectées des paramètres au calcul de la tarification actualisée.
   Une fois le résultat obtenu, il est mis à disposition, c'est à dire qu'il peut désormais être traité par toute sorte de processus.
   Dans un mode de réalisation de l'invention, une étape d'information va communiquer cette tarification à l'utilisateur 10. Cette information peut se faire au travers de moyens graphiques, sonores, ou tout autre moyen permettant de transmettre l'information à l'utilisateur.
   Un autre mode de réalisation selon l'invention consiste en ce que, après l'étape de mise à disposition, une étape d'analyse compare la tarification actualisée à un seuil. Ce seuil est lié au format de la tarification. Si celle-ci se présente sous la forme d'un montant, le seuil sera également un montant, si la tarification se présente sous la forme d'un tarif horaire, le seuil sera de même, si la tarification a une forme complexe formée de plusieurs valeurs, le seuil sera en rapport. Selon le résultat de cette comparaison, le procédé selon l'invention va déclencher des réactions. Dans un mode de réalisation, cette réaction peut être un arrêt du service concerné, ou une dégradation des performances, l'émission d'un signal ou toute autre action envisageable.

Dans un mode de réalisation de l'invention, le Front-End peut ne pas posséder les ressources nécessaires à la réalisation de l'étape d'application. Dans ce cas, les valeurs collectées par le Front-End lors de l'étape de collecte seront transmises à un autre dispositif électronique qui va réaliser l'étape d'application. Ce dispositif n'est pas forcément partie prenante dans la mise en oeuvre du service dont la tarification est calculée. Nous sommes typiquement dans le cas où le service concerné implique un téléphone portable (Front-End) et un serveur distant. Pour calculer la tarification du service, le téléphone a rassemblé les paramètres nécessaires dans sa propre mémoire et auprès du serveur, mais il a besoin de ressources cryptographiques qu'il ne possède pas, mais que possède une carte à puce à laquelle il est connecté (une carte SIM par exemple), alors le téléphone va pouvoir sous traiter le calcul à cette carte à puce. De la même manière dans un mode de réalisation de l'invention, l'étape d'information peut se faire dans un dispositif électronique indépendant. Par exemple si la tarification d'un service de messagerie est mise a disposition par le téléphone, mais diffusée de manière sonore à l'utilisateur par un « kit main libre » sans contact, ce « kit main libre » est en charge de l'étape d'information, mais ne fait pas partie des dispositifs électroniques impliqués dans le service de messagerie.
Les critères qui sont collectés auprès des différents dispositifs électroniques impliqués dans le service à facturer peuvent être de diverses natures.
Nous noterons que l'étape d'initiation peut être déclenchée lors d'une action de l'utilisateur, par exemple sur une requête explicite ou par association avec une action. Par exemple le fait de consulter une liste de services disponible déclenche une étape d'initiation pour chacun des services afin de pouvoir informer l'utilisateur potentiel de leur tarification. De la même manière, la consultation de l'annuaire électronique d'un téléphone peut déclencher une phase d'initiation pour chacun des numéros et ainsi afficher à côté de chaque contact la tarification qui lui est associée. Dans un tout autre mode de réalisation la phase d'initiation peut se déclencher de manière beaucoup plus automatique.
Par exemple pendant une communication téléphonique, le téléphone peut initier la mise à jour de la tarification toutes les X secondes afin de tenir l'utilisateur informé des variations éventuelles de celle-ci.
La présente invention est particulièrement adaptée à tous les dispositifs électroniques communicants mettant en oeuvre des services partagés. Parmi ces dispositifs nous noterons de manière non limitative, les ordinateurs personnels, les agendas électroniques, mais aussi les terminaux de paiement... etc, etc.
Nous noterons aussi que la présente invention peut avantageusement s'appliquer à la mise à disposition d'informations complexes liées à un service réparti autre que la tarification.

## Revendications

1. Procédé de mise à disposition, de la tarification actualisée d'un service (16) réparti entre plusieurs dispositifs électroniques (11, 12, 14, 18), ladite tarification variant selon au moins un paramètre (30, 31, 32, 33, 34, 35) stocké dans la mémoire (15, 19) d'un desdits dispositifs électroniques,
**caractérisé en ce que**, le procédé comporte une étape d'initiation, un desdits dispositifs électroniques (11), dit Front-End, initie une mise à disposition de la tarification dudit service (16),
- une étape de collecte, étape durant laquelle, le Front-End établit une communication avec chacun desdits au moins un autre dispositif électronique (14) contenant un paramètre (33, 34) apte à faire varier ladite tarification, et télécharge, dans une mémoire locale (19), la valeur instantanée dudit paramètre,
- une étape d'application, consistant en l'application dudit au moins un paramètre (30, 31, 32, 33, 34, 35) de la tarification actualisée dudit service (16),
- une étape de Mise à disposition, consistant en la mise à disposition de ladite tarification actualisée dudit service.

2. Procédé selon la revendication 1 **caractérisé en ce qu'**il comprend en outre une étape d'information, consistant en une transmission de ladite tarification actualisée, au client (10) dudit service.

3. Procédé selon la revendication 2, **caractérisé en ce que** l'étape d'information consiste à afficher ladite tarification actualisée sur un écran.

4. Procédé selon la revendication 2, **caractérisé en ce que** l'étape d'information consiste à diffuser ladite tarification actualisée via un dispositif apte à émettre des ondes sonores.

5. Procédé selon l'une quelconque des revendications 1 à 4 **caractérisé en ce qu'**il comprend en outre une étape de décision, consistant en un déclenchement d'au moins une étape de réaction si ladite tarification actualisée atteint un seuil prédéfini.

6. Procédé selon la revendication 5, **caractérisé en ce que** l'étape de réaction consiste en une interruption dudit service.

7. Procédé selon l'une quelconque des revendications 1 à 6 **caractérisé en ce que** le au moins un paramètre (30, 31, 32, 33, 34, 35) est une position géographique.

8. Procédé selon l'une quelconque des revendications 1 à 6 **caractérisé en ce que** le au moins un paramètre (30, 31, 32, 33, 34, 35) est une durée.

9. Procédé selon l'une quelconque des revendications 1 à 6 **caractérisé en ce que** le au moins un paramètre (30, 31, 32, 33, 34, 35) est une valeur calendaire.

10. Procédé selon l'une quelconque des revendications 1 à 6 **caractérisé en ce que** le au moins un paramètre (30, 31, 32, 33, 34, 35) est dépendant d'un tiers.

11. Procédé selon l'une quelconque des revendications 1 à 10 **caractérisé en ce que** l'étape d'initiation est réalisée avant le lancement dudit service (16).

12. Procédé selon l'une quelconque des revendications 1 à 10 **caractérisé en ce que** l'étape d'initiation est réalisée pendant l'exécution dudit service (16).

13. Procédé selon l'une quelconque des revendications 1 à 10 **caractérisé en ce que** l'étape d'initiation est réalisée à la demande de l'utilisateur (10).

14. Procédé selon l'une des revendications 1 à 13
**caractérisé en ce que** ledit service (16) est un échange de données.

15. Dispositif électronique communicant (11) possédant des moyens pour fournir, en collaboration avec au moins un autre dispositif électronique (12, 15, 18), un service (16) à un usager (10), la tarification dudit service variant selon au moins un paramètre (30, 31, 32, 33, 34, 35), ledit au moins un paramètre étant stocké dans la mémoire (15, 19) d'un desdits dispositifs électroniques (11, 12, 14, 18) **caractérisé en ce qu'**il possède des moyens pour initier une mise à disposition de la tarification actualisée dudit service, ainsi que des moyens pour collecter et stocker ledit au moins un paramètre (30, 31, 32, 33, 34, 35) nécessaire à l'établissement de ladite tarification actualisée dudit service (16).
